# EUROPEAN PATENT SPECIFICATION

(11) **EP 1 491 465 B1**
(45) Date of publication and mention of the grant of the patent: **29.03.2006**
(21) Application number: 04102312.8
(22) Date of filing: 26.05.2004
(51) Int. Cl.: B65G 1/04, B65H 19/12

(54) **Intermediate storing apparatus for handling roll goods**
Vorrichtung zum Zwischenlagern von rollenförmigen Gegenständen
Dispositif de stockage intermédiaire d'articles de type rouleau

(30) Priority: 24.06.2003 FI 20030939
(43) Date of publication of application: 29.12.2004
(73) Proprietor: Done Logistics Oy, 61800 Kauhajoki (FI)
(72) Inventor: Nurmela, Juhani, 61720, Koskue (FI); Knuuttila, Jorma, 60720, Tuomikylä (FI)
(74) Representative: Kangasmäki, Reijo Holger

(56) References cited:
- WO-A-01/83334
- US-A- 5 085 377
- PATENT ABSTRACTS OF JAPAN vol. 0132, no. 02 (M-824), 12 May 1989 (1989-05-12) & JP 1 022706 A (KANEDA KIKAI SEISAKUSHO:KK), 25 January 1989 (1989-01-25)

## Description

The invention relates to an intermediate storing apparatus for handling roll goods, such as rolls of paper, board, plastics and/or the like, said intermediate storing apparatus comprising means for handling roll goods by manipulating the roll goods, and a storage depot for intermediate storing the roll goods on a base.

The above logistic is prior known, e.g. from handling paper rolls in a paper mill. In such applications today, paper rolls are typically handled by carrying them first by a forklift onto a feeding carriage used for conveying the same onto a butting face present in a storage depot. The feeding carriage used in this process is generally provided with a tilting deck, as well as with lifting devices for placing the rolls on a butting face. On the butting face, each roll placed thereon rolls from one obstacle on the face to the next as necessary, by opening/closing the obstacles. In practice, this type of mechanically controlled butting face is generally established by means of depressions on floor level, in addition to which the face is usually designed to be inclined. Traditional solutions further include pickup carriages of a so-called master carriage type, which are provided with actuators for lifting paper rolls from a butting face and for placing the same on tilting carrier decks included therein. This is followed by moving the paper rolls by pickup carriages on to further processing, such as e.g. to cutter carriages, which are generally also provided with lifter arrangements etc., as described above, as well as with tilting decks. This is followed by delivering the paper rolls further from the cutter carriage to a cutter by using the tilting carrier deck included therein.

As described above, modern technology in the above application relies largely on technical solutions based on free rolling of rolls. However, this results in a wide variety of drawbacks both economically and in terms of work safety. Thus, e.g. when handled in multiple operations with lifting devices, such as forklifts or the like, paper rolls sustain damages, which always results in wastage as the outer layers become marred. In terms of work safety, there is a particularly high risk that rolls in an intermediate storage facility are set inadvertently in gravitational motion, which is why occupational accidents are possible in such conditions as workers receive injuries when struck by moving paper rolls. Generally speaking, current intermediate storage systems as a whole require firstly unacceptably laborious processing and secondly unacceptably massive basic equipment, which in turn requires unnecessarily complicated automation for performing various maneuvers carried out in multiple successive operations, e.g. by lifting rolls unnecessarily, etc.

US Patent 5,085,377 discloses an intermediate storing apparatus conform to the preamble of claim 1.

The objective of an intermediate storing apparatus of the present invention is to provide a decisive improvement regarding the foregoing problems and to thereby raise essentially the available prior art.

The apparatus of claim 1 fulfils this objective.

The most important benefits gained by an intermediate storing apparatus of the invention include the simplicity and efficiency of basic equipment and its operating principle needed for implementing the invention. The invention enables also a remarkable improvement both in terms of production economy by virtue of reduced wastage of handled roll goods and also in terms of occupational safety. The invention has its benefits based on the fundamental concept that there should be no unnecessary pick-ups and transfers of roll goods in traditional ways from equipment to equipment in the process of intermediate storing, but that the process is performed comprehensively in a simple manner with as few pieces of basic equipment as possible. The all-around handling of roll goods within a storage depot by means of a roll manipulator, implemented e.g. on a so-called gantry-crane principle, ensures also that the roll goods cannot at any time start inadvertently rolling e.g. upon persons working at the storage depot. Furthermore, a stationary, totally immobilized laydown base present in the storage depot ensures that rolls placed thereon remain stationary without rolling. If necessary, however, it is possible in this context, e.g. in connection with a laydown base, to make use of suitable extra support systems, such as wedge bars or the like included in the base, the purpose of which is to prevent inadvertent rolling of the rolls in case the latter are subjected to external force actions. Indeed, one essential benefit gained by an intermediate storing apparatus of the invention lies broadly in the fact that it is possible thereby to significantly reduce wastage, since a roll manipulator designed according to the invention is capable of handling roll goods by pushing it in a controlled fashion, such that it does not sustain damages while manipulated during an intermediate storing process, nor can it commence unimpeded rolling in any situation against obstacle surfaces, which is the reason why significant damages cannot be avoided in current systems.

Preferred embodiments for an intermediate storing apparatus of the invention are disclosed in dependent claims directed thereto.

The invention and preferred embodiments of the invention will be described in detail in the following specification while reference is made to the accompanying drawings, in which
- fig. 1: shows one preferred intermediate storing apparatus of the invention in a perspective view,
- fig. 2: shows the embodiment of fig. 1 in a side view,
- fig. 3: shows the embodiment of fig. 1 in a plan view, and further
- fig. 4: shows the embodiment of fig. 1 in a view from the unloading end.

The invention relates to an intermediate storing apparatus for handling roll goods, such as rolls of paper, board, plastics and/or the like, said intermediate storing apparatus comprising means for handling roll goods by manipulating the roll goods and a storage depot 2 for intermediate storing the roll goods on a base. The means for handling roll goods are provided by a roll manipulator 1 equipped with an overhead support and operating assembly 1a, such as implemented on a gantry-crane principle or the like, which handles each roll specimen in conjunction with the storage depot 2 individually by conveying it on the base to and/or from a desired laydown spot 2x by pushing the roll specimen in a controlled fashion along the base.

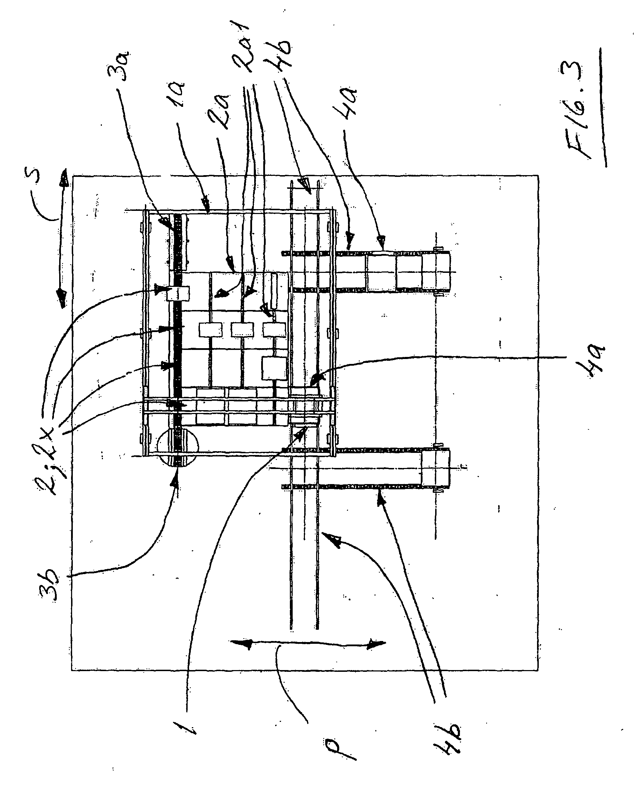

In a preferred embodiment, the storage depot 2 comprises a substantially horizontally arranged, stationary laydown base 2a, particularly for denying roll goods a chance to start moving, not in response to gravity in any case, inadvertently on the laydown base 2a. Furthermore, particularly as depicted in fig. 3, the laydown base 2a is provided in the illustrated embodiment with storage spots 2x arranged in four sectors.

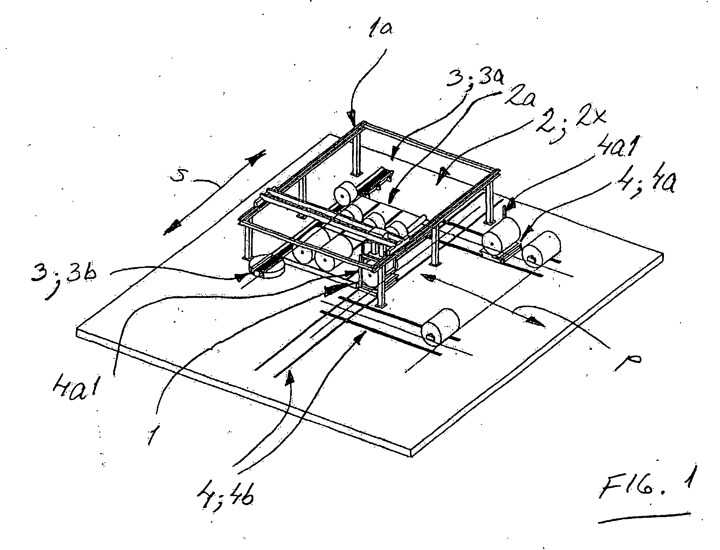

In a further preferred embodiment, in conjunction with the storage depot 2 is provided a first transfer conveyor assembly 3 for carrying roll goods onto the laydown base 2a. The first transfer conveyor assembly 3 comprises a conveyor, such as a trough-like slat conveyor 3a or the like, comprising a support structure which extends transversely p relative to a traveling direction s and is illustrated particularly in fig. 1, enabling a transfer of roll goods with the discussed conveyor in a manner preventing at least its gravity-induced self-powered rolling.

In a still preferred embodiment, in conjunction with the storage depot 2 is provided a second transfer conveyor assembly 4 for carrying roll goods from the laydown base 2a onwards to further processing thereof. The second transfer conveyor assembly 4 comprises a conveyor pallet system for carrying roll goods upon one or more conveyor pallets 4a comprising a support structure, enabling a transfer of roll goods with the discussed conveyor in a manner preventing at least its gravity-induced self-powered rolling, such as by means of rail systems 4b arranged in directions s, p perpendicular to each other on a 4-way carriage principle depicted in figs. 1 and 3.

Furthermore, according to the principle appearing especially from fig. 3, the overhead support and operating assembly 1a' of the roll manipulator 1 is adapted in the illustrated embodiment to cover an operating range enabling utilization of the storage depot 2; 2a, the first transfer conveyor assembly 3 and the second transfer conveyor assembly 4.

In yet another preferred embodiment disclosed particularly in fig. 1, in conjunction with the first transfer conveyor assembly 3 is provided a turntable 3b for the realignment or the like of roll goods.

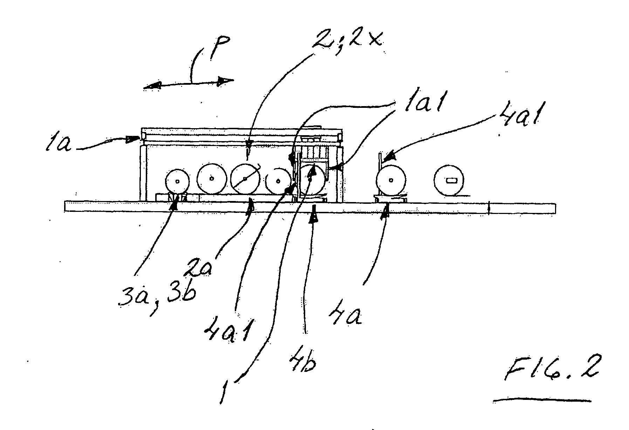

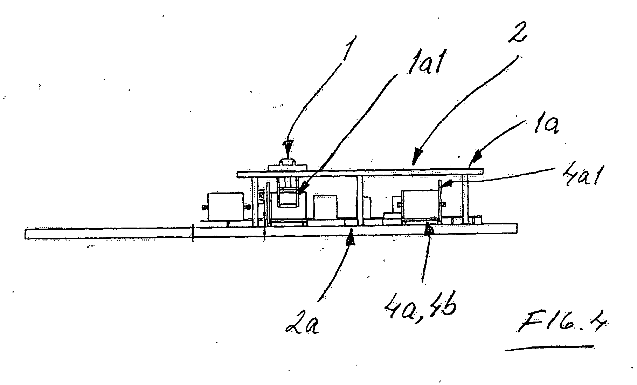

In a further preferred embodiment shown in figs. 2 and 4, the roll manipulator 1 is provided with support assemblies 1a1 mountable against the side surfaces and/or end surfaces of presently handled roll goods. Respectively, the storage depot has its laydown base 2a and/or second transfer conveyor assembly 4 provided with extra support assemblies 2a1/4a1, designed on principles depicted e.g. in figs. 2, 3 and 4, for preventing especially unimpededly standing roll goods from being inadvertently set in rolling motion.

It is obvious that the invention is not limited to the embodiments described or explained above, but it can be varied within the scope of the invention as defined by the appended claims. Thus, firstly, it is appreciated that e.g. the conveyor assemblies provided in conjunction with the storage depot can be further implemented in a more integrated manner than what is described above, e.g. such that one and the same conveyor pallet assembly, operating e.g. on a 4-way carriage principle, is also responsible for feeding the storage depot. On the other hand, with respect to the inventive intermediate storing apparatus, it is also possible to exploit technology other than what is described above, particularly e.g. when dealing with a type of roll goods other than paper rolls, in which the subsequent further process is typically a transfer of roll goods to a cutter. Moreover, the conveying assembly implemented on a 4-way carriage principle can also be realized with a rail system arranged in multiple directions or in such a manner that the number of passages to further processing, such as to a cutter, is more than what is described above. Still furthermore, in the embodiment shown in the attached drawings, the storage depot has its laydown spots established by providing specific sectors for each type of roll, which can nevertheless be implemented in ways other than those described, such that all roll goods are brought onto a laydown base on a traditional "rear loading" principle in such a way that the control of a roll manipulator comprises a simultaneous recording of data regarding roll goods presently in each sector unit for ensuring correct further processing. Additionally, it is naturally possible to organize a storage depot in such a way that it only has a place for a single type of roll goods, or else in such a way that it has more successive sectors than in the above-described embodiment for roll goods of varying dimensions and/or types.

## Claims

1. An intermediate storing apparatus for handling roll goods, such as rolls of paper, board, plastics and/or the like, said intermediate storing apparatus comprising means equipped with an overhead support and operating assembly (1a), such as implemented on a gantry-crane principle or the like, for handling roll goods, and a storage depot (2) for intermediate storing the roll goods on a base, wherein the means for handling roll goods are provided by a roll manipulator (1), which handles each roll specimen in conjunction with the storage depot (2) individually, **characterized in that** the roll manipulator (1) conveys each roll specimen individually on the base to and/or from a desired laydown spot (2x) by pushing the roll specimen in a controlled fashion along the base.

2. An intermediate storing apparatus as set forth in claim 1, **characterized in that** the storage depot (2) comprises a substantially horizontally arranged, stationary laydown base (2a), particularly for denying roll goods a chance to start moving, not in response to gravity in any case, inadvertently on the laydown base (2a).

3. An intermediate storing apparatus as set forth in claim 2, **characterized in that** in conjunction with the storage depot (2) is provided a first transfer conveyor assembly (3) for carrying roll goods onto the laydown base (2a).

4. An intermediate storing apparatus as set forth in claim 3, **characterized in that** the first transfer conveyor assembly (3) comprises a conveyor, such as a trough-like slat conveyor (3a) or the like, comprising a support structure which extends transversely (p) relative to its traveling direction (s), enabling a transfer of roll goods with the discussed conveyor in a manner preventing at least its gravity-induced self-powered rolling.

5. An intermediate storing apparatus as set forth in claim 3 or 4, **characterized in that** in conjunction with the storage depot (2) is provided a second transfer conveyor assembly (4) for carrying roll goods from the base (2a) onwards to further processing thereof.

6. An intermediate storing apparatus as set forth in claim 5, **characterized in that** the second transfer conveyor assembly (4) comprises a conveyor pallet system for carrying roll goods upon one or more conveyor pallets (4a) comprising a support structure, enabling a transfer of roll goods with the discussed conveyor in a manner preventing at least its gravity-induced self-powered rolling, such as by means of rail systems (4b) arranged in directions (s, p) perpendicular to each other on a 4-way carriage principle or the like.

7. An intermediate storing apparatus as set forth in any of preceding claims 3-6, **characterized in that** the overhead support and operating assembly (1a) of the roll manipulator (1) covers an operating range enabling utilization of the storage depot (2; 2a), the first transfer conveyor assembly (3) and/or the second transfer conveyor assembly (4).

8. An intermediate storing apparatus as set forth in any of preceding claims 3-7, **characterized in that** in conjunction with the first transfer conveyor assembly (3) is provided a turntable (3b) for the realignment or the like of roll goods.

9. An intermediate storing apparatus as set forth in any of preceding claims 1-8, **characterized in that** the roll manipulator (1) is provided with support assemblies (1a1) mountable against the side surfaces and/or end surfaces of presently handled roll goods.

10. An intermediate storing apparatus as set forth in any of preceding claims 2-9, **characterized in that** the storage depot has its laydown base (2a) and/or second transfer conveyor assembly (4) provided with extra support assemblies (2a1/4a1) for preventing especially unimpededly standing roll goods from being inadvertently set in rolling motion.

## Patentansprüche

1. Vorrichtung zum Zwischenlagern von rollenförmigen Gegenständen, wie beispielsweise Papier-, Karton-, Kunststoff- und/oder ähnlichen Rollen, wobei die genannte Vorrichtung zum Zwischenlagern Mittel, die mit einer Überkopfstütz- und Betriebseinrichtung (1a), wie sie beispielsweise in einem Brückenkranprinzip oder ähnlichem implementiert ist, ausgestattet sind, zum Zwischenlagern rollenförmiger Gegenstände und ein Lagerdepot (2) zur unmittelbaren Lagerung der Gegenstände auf einer Basis umfasst, wobei die Mittel zum Umschlag der rollenförmigen Gegenstände von einem Rollenmanipulator (1) bereitgestellt werden, der jedes Rollenexemplar in Verbindung mit dem Lagerdepot (2) individuell umschlägt, **dadurch gekennzeichnet, dass** der Rollenmanipulator (1) jedes Rollenexemplar auf der Basis zu und/oder von einem gewünschten Ablagepunkt (2x) individuell transportiert, indem das Rollenexemplar kontrolliert die Basis entlang geschoben wird.

2. Vorrichtung zum Zwischenlagern nach Anspruch 1, **dadurch gekennzeichnet, dass** das Lagerdepot (2) eine im Wesentlichen horizontal angeordnete, stationäre Ablagebasis (2a) umfasst, insbesondere um zu verhindern, dass sich die rollenförmigen Gegenstände auf der Ablagebasis (2a) auf keinen Fall in Folge der Gravitation versehentlich in Bewegung setzen.

3. Vorrichtung zum Zwischenlagern nach Anspruch 2, **dadurch gekennzeichnet, dass** in Verbindung mit dem Lagerdepot (2) eine erste Beförderungseinrichtung (3) zum Tragen von rollenförmigen Gegenständen auf die Ablagebasis (2a) bereitgestellt wird.

4. Vorrichtung zum Zwischenlagern nach Anspruch 3, **dadurch gekennzeichnet, dass** die erste Beförderungseinrichtung (3) einen Förderer, wie beispielsweise einen durchgehenden Plattenbandförderer (3a) oder ähnliches, umfasst, der eine Stützstruktur umfasst, die sich in Bezug auf ihre Laufrichtung (s) schräg (p) ausdehnt und eine Beförderung rollenförmiger Gegenstände mit dem besagten Förderer auf eine Art gestattet, dass zumindest deren gravitationsbedingtes eigenständiges Rollen verhindert wird.

5. Vorrichtung zum Zwischenlagern nach Anspruch 3 oder 4, **dadurch gekennzeichnet, dass** im Zusammenhang mit dem Lagerdepot (2) eine zweite Beförderungseinrichtung (4) zum Weitertragen rollenförmiger Gegenstände von der Basis (2a) zu ihrer weiteren Verarbeitung bereitgestellt wird.

6. Vorrichtung zum Zwischenlagern nach Anspruch 5, **dadurch gekennzeichnet, dass** die zweite Beförderungseinrichtung (4) ein Förderpalettensystem zum Tragen rollenförmiger Gegenstände auf einem oder mehreren Förderpaletten (4a) umfasst, das eine Stützstruktur umfasst, die eine Beförderung rollenförmiger Gegenstände mit dem besagten Förderer auf eine Art gestattet, dass zumindest deren gravitationsbedingtes eigenständiges Rollen verhindert wird, wie beispielsweise durch Schienensysteme (4b), die in den Richtungen (s, p) senkrecht zueinander in einem 4-Wege-Trageprinzip oder ähnlichem angeordnet sind.

7. Vorrichtung zum Zwischenlagern nach einem der Ansprüche 3 bis 6, **dadurch gekennzeichnet, dass** die Überkopfstütz- und Betriebseinrichtung (1a) des Rollenmanipulators (1) einen Betriebsbereich abdeckt, der die Nutzung des Lagerdepots (2; 2a), der ersten Beförderungseinrichtung (3) und/oder der zweiten Beförderungseinrichtung (4) gestattet.

8. Vorrichtung zum Zwischenlagern nach einem der Ansprüche 3 bis 7, **dadurch gakennzeichnet,** dass in Verbindung mit der ersten Beförderungseinrichtung (3) ein Drehtisch (3b) für die Neuausrichtung oder ähnliches der rollenförmigen Gegenstände bereitgestellt wird.

9. Vorrichtung zum Zwischenlagern nach einem der Ansprüche 1 bis 8, **dadurch gekennzeichnet, dass** der Rollenmanipulator (1) mit Stützeinrichtungen (1a1) bereitgestellt wird, die an den Seitenflächen und/oder Endflächen der gegenwärtig behandelten Rolle montierbar sind.

10. Vorrichtung zum Zwischenlagern nach einem der Ansprüche 2 bis 9, **dadurch gekennzeichnet, dass** die Ablagebasis (2a) und/oder die zweite Beförderungseinrichtung (4) des Lagerdepots mit zusätzlichen Stützeinrichtungen (2a1/4a1) bereitgestellt werden/wird, die verhindern, dass sich insbesondere ungehindert stehende rollenförmige Gegenstände versehentlich in Bewegung setzen.

## Revendications

1. Dispositif de stockage intermédiaire d'articles de type rouleau, comme des rouleaux de papier, de carton, de plastique ou équivalent, ledit dispositif de stockage intermédiaire comprenant des moyens équipés d'un support suspendu et d'un ensemble de manoeuvre (1a), reposant sur le principe d'un pont-transbordeur ou équivalent, pour la manutention d'articles de type rouleau, et un dépôt de stockage (2) pour le stockage intermédiaire des articles de type rouleau sur une base, les moyens de manutention des articles de type rouleau étant constitués d'un manipulateur de rouleaux (1) qui déplace séparément chaque rouleau en liaison avec le dépôt de stockage (2), **caractérisé en ce que** le manipulateur de rouleaux (1) transporte séparément chaque rouleau sur la base vers et en provenance d'un point de dépose souhaité (2) en poussant le rouleau de manière contrôlée sur la base.

2. Dispositif de stockage intermédiaire selon la revendication 1, **caractérisé en ce que** le dépôt de stockage (2) se compose d'une base de dépose (2a) fixe horizontale, en particulier pour empêcher que les articles de type rouleau puissent commencer à bouger accidentellement sur la base de dépose, en aucun cas sous l'effet de la gravité.

3. Dispositif de stockage intermédiaire selon la revendication 2, **caractérisé en ce qu'un** premier transporteur de transfert (3) est associé au dépôt de stockage (2) pour transporter les articles de type rouleau jusqu'à la base de dépose (2a).

4. Dispositif de stockage intermédiaire selon la revendication 3, **caractérisé en ce que** le premier transporteur de transfert (3) se compose d'un transporteur de type transporteur à lattes (3a) ou équivalent, constitué d'une structure porteuse implantée perpendiculairement (p) à son sens de déplacement (a), permettant le transport des articles de type rouleau avec le transporteur mentionné d'une manière empêchant au minimum qu'il roule de lui-même sous l'effet de la gravité.

5. Dispositif de stockage intermédiaire selon la revendication 3 ou 4, **caractérisé en ce qu'un** deuxième transporteur de transfert (4) est associé au dépôt de stockage (2) pour transporter les articles de type rouleau à partir de la base (2a) pour la suite des opérations.

6. Dispositif de stockage intermédiaire selon la revendication 5, **caractérisé en ce que** le deuxième transporteur de transfert (4) se compose d'un système à palettes pour transporter les articles de type rouleau sur une ou plusieurs palettes de transporteur (4a), constitué d'une structure porteuse permettant un transfert des articles de type rouleau avec le transporteur mentionné d'une manière empêchant au minimum qu'il roule de lui-même sous l'effet de la gravité, par exemple à l'aide de systèmes de rails (4b) disposés dans les directions (s, p) perpendiculaires l'une par rapport à l'autre selon le principe d'un chariot 4 voies ou équivalent.

7. Dispositif de stockage intermédiaire selon d'une quelconque des revendications 3 à 6, **caractérisé en ce que** le support suspendu et l'ensemble de manoeuvre (1a) du manipulateur de rouleaux (1) couvrent une surface de travail permettant d'utiliser le dépôt de stockage (2 ; 2a), le premier transporteur de transfert (3) et/ou le deuxième transporteur de transfert (4).

8. Dispositif de stockage intermédiaire selon d'une quelconque des revendications 3 à 7, **caractérisé en ce qu'**une table tournante (3b) est associée au premier transporteur de transfert (3) pour le réalignement ou équivalent des articles de type rouleau.

9. Dispositif de stockage intermédiaire selon d'une quelconque des revendications 1 à 8, **caractérisé en ce que** le manipulateur de rouleaux (1) est équipé de montages de support (1a1) qui peuvent être montés contre les surfaces latérales et/ou d'extrémité des articles de type rouleau manutentionnés.

10. Dispositif de stockage intermédiaire selon d'une quelconque des revendications 2 à 9, **caractérisé en ce que** la base de dépose (2a) et/ou le deuxième transporteur de transfert (4) du dépôt de stockage sont équipés de montages de support supplémentaires (2a1/4a1) pour empêcher les articles de type rouleau situés en position verticale sans appui de rouler accidentellement.
